(19) Europäisches Patentamt
European Patent Office
Office européen des brevets

(11) EP 3 909 822 A1

(12) DEMANDE DE BREVET EUROPEEN

(43) Date de publication:
17.11.2021 Bulletin 2021/46

(51) Int Cl.:
$B60W\ 30/18\ ^{(2012.01)}$  $B60W\ 40/072\ ^{(2012.01)}$
$G05D\ 1/02\ ^{(2020.01)}$  $B60W\ 50/00\ ^{(2006.01)}$

(21) Numéro de dépôt: 21172197.2

(22) Date de dépôt: 05.05.2021

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 12.05.2020 FR 2004667

(71) Demandeur: RENAULT s.a.s.
92100 Boulogne-Billancourt (FR)

(72) Inventeur: PEYRET, Maud
75014 Paris (FR)

(54) **MODULE DE CALCUL DE TRAJECTOIRE, DISPOSITIF DE CONTRÔLE DE TRAJECTOIRE ET PROCÉDÉ ASSOCIÉS**

(57) Le module (6) de calcule de trajectoire pour véhicule automobile comporte des moyens transmettre un premier vecteur d'état de consigne en entrée d'une boucle de régulation (Br) fermée d'un dispositif de contrôle de trajectoire (5) de sorte que le véhicule circulant sur une première voie de circulation se déporte sur une deuxième voie de circulation, la trajectoire étant modélisée par une première courbe de Bézier.

Il comporte en outre :

- des moyens pour modéliser une trajectoire de retour du véhicule au centre de la première voie de circulation lors de l'abandon du changement de voie de circulation par une deuxième courbe de Bézier,
- des moyens pour transmettre et déterminer un deuxième vecteur d'état de consigne à partir de la deuxième courbe de Bézier, et
- des moyens pour transmettre le deuxième vecteur d'état de consigne en entrée de la boucle.

[Fig 2]

EP 3 909 822 A1

**Description**

La présente invention concerne un dispositif de contrôle de trajectoire pour véhicule automobile.

La présente invention concerne plus particulièrement un dispositif pour contrôler en temps réel la trajectoire d'un véhicule automobile lors d'un changement de trajectoire, par exemple lors d'un changement de voie de circulation, un module de calcul de trajectoire intégré dans le dispositif et un procédé de mise en œuvre d'un tel dispositif.

Certains véhicules automobiles sont à ce jour équipés de dispositifs de contrôle de trajectoire conçus de tels sorte qu'ils permettent d'assister le conducteur pour maintenir le véhicule dans la voie dans laquelle il circule, notamment pour maintenir le véhicule au centre de la voie. De tels dispositifs peuvent également équiper les véhicules autonomes dans lesquels la conduite est entièrement déléguée au véhicule. Ils agissent sur la direction du véhicule en modifiant l'angle de braquage des roues directrices du véhicule.

De tels dispositifs peuvent également permettre au véhicule de changer de voies de circulation de façon semi-autonome lorsque le conducteur du véhicule actionne par exemple un clignotant et modifie la position du volant, ou de façon autonome, l'instant de changement de voie de circulation étant déterminé par le dispositif.

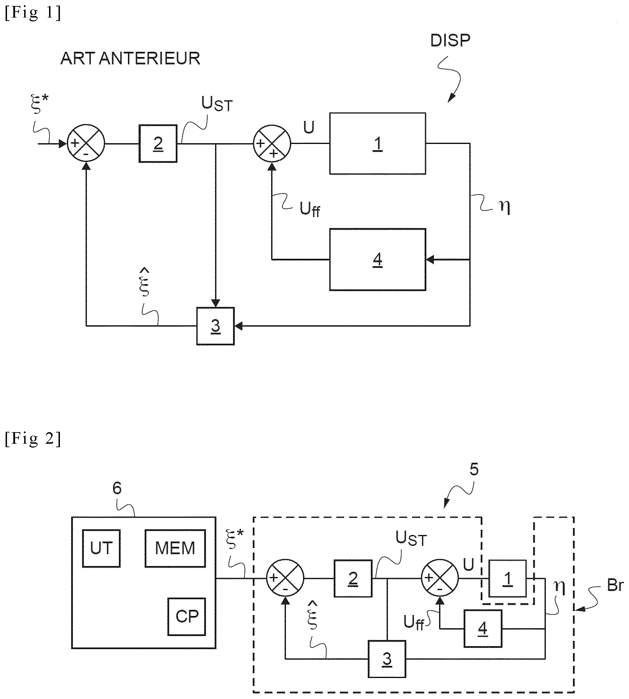

La figure 1 illustre un dispositif DISP de contrôle en temps réel de trajectoire appliqué à un véhicule 1 automobile à traction entraîné par un moteur comportant deux roues directrices, de préférence les roues avant du véhicule, contrôlées par un actionneur piloté par un signal de commande *U*.

Dans ce qui suit l'opérateur $\dot{x}$ désigne la dérivée de *x*.

Le véhicule 1 comprend en outre un capteur destiné à mesurer un paramètre de roulage du véhicule, tel que la vitesse longitudinale réelle V, l'angle $\delta$ de braquage réalisé des roues avant, la vitesse de lacet $\dot{\Psi}$ du véhicule ou l'angle de direction.

Le véhicule peut en outre être équipé d'un appareil de type RaCam combinant les propriétés d'une caméra optique et d'un radar, permettant de fournir un modèle d'une ligne directrice de la voie de circulation du véhicule sous la forme d'un polynôme y(x) ou d'une caméra optique permettant de déterminer le polynôme y(x).

Le véhicule 1 est équipé d'un calculateur embarqué comprenant un dispositif contrôleur 2 pour générer un signal de commande *Ust* de façon à rendre un vecteur d'état physique $\xi$ du véhicule conforme à un vecteur d'état de consigne $\xi^*$ pour que le véhicule 1 suive une trajectoire souhaitée.

Le calculateur embarqué comprend en outre un observateur 3 pour générer en temps réel un vecteur d'état estimé $\hat{\xi}$ de suivi de trajectoire. Ce vecteur d'état est estimé pour une vitesse V du véhicule, à partir de la commande *Ust* et d'un vecteur $\eta$ de mesure de variables d'état corrélé au vecteur d'état physique $\xi$ de suivi de trajectoire du véhicule 1.

Le dispositif observateur 3 a pour but de générer en temps réel un vecteur d'état estimé $\hat{\xi}$ représentant le plus fidèlement possible le vecteur $\xi$ d'état effectif, et met en œuvre un modèle de véhicule connu sous le nom de modèle bicyclette.

Le calculateur embarqué comporte en outre un module anticipateur 4 additionnant une deuxième commande *Uff* de braquage en fonction d'une courbure $\gamma$ff d'un virage, à la première commande *Ust* de braquage produite par le dispositif 2 pour compenser le virage.

La deuxième commande de braquage *Uff* permet au véhicule 1 de franchir le virage de courbure $\gamma$ff.

La deuxième commande est ajoutée au signal de commande *Ust* de sorte que le dispositif contrôleur 2 régule la trajectoire du véhicule 1 pour que le véhicule 1 suive une route droite.

Par conséquent, le signal de commande *U* est égal à la somme de la première commande *Ust* et de la deuxième commande *Uff*.

Le dispositif 2, l'observateur 3 et le module 4 forment une boucle de régulation fermée Br ayant pour consigne le vecteur d'état de consigne $\xi^*$.

Le vecteur d'état physique $\xi$ du véhicule est égal à :

$$\xi = \begin{pmatrix} \dot{\Psi} \\ \Psi \\ \dot{yl} \\ yl \\ \dot{\delta} \\ \delta \\ \int -yl \end{pmatrix}$$

$$(1)$$

où $\Psi$ est l'angle relatif de cap entre l'axe du véhicule et la tangente à la trajectoire de référence, $\dot{yl}$ est la vitesse latérale d'éloignement du véhicule par rapport à la trajectoire idéale du véhicule, yl est l'écart latéral entre le centre de gravité du véhicule et le centre de la voie du véhicule et la tangente à la trajectoire en avant du véhicule, $\dot{\delta}$ est la variation de l'angle de braquage et $\int -yl$ représente l'intégrale de la position latérale.

Le vecteur d'état de consigne $\xi^*$ est égal à :

$$\xi^* = \begin{pmatrix} \dot{\Psi}_{ref} \\ \Psi_{ref} \\ \dot{yl}_{ref} \\ yl_{ref} \\ \dot{\delta}_{ref} \\ \delta_{ref} \\ \int -yl_{ref} \end{pmatrix} \qquad (2)$$

Et le vecteur d'état estimé $\hat{\xi}$ est égal à :

$$\hat{\xi} = \begin{pmatrix} \dot{\Psi}_{est} \\ \Psi_{est} \\ \dot{yl}_{est} \\ yl_{est} \\ \dot{\delta}_{est} \\ \delta_{est} \\ \int -yl_{est} \end{pmatrix} \qquad (3)$$

Le vecteur $\xi$ est partiellement inconnu car l'état interne du véhicule 1 n'est pas accessible dans sa totalité.

L'observateur 3 estime la vitesse latérale d'éloignement du véhicule par rapport à la trajectoire idéale du véhicule $\dot{yl}$ et la variation de l'angle de braquage $\dot{\delta}$, les cinq variables d'état étant mesurées.

Le vecteur $\eta$ de mesures actuelles comporte cinq composantes :

$$\eta = \begin{pmatrix} \dot{\Psi} \\ \Psi \\ yl \\ \delta \\ \int -yl \end{pmatrix} \qquad (4)$$

La vitesse de lacet $\dot{\Psi}$ est mesurée par le capteur de vitesse de lacet.

Lors d'un changement de voie de circulation, le vecteur d'état de consigne $\xi^*$ est modifié de sorte que le dispositif DISP pilote le véhicule 1 afin qu'il se déporte au centre d'une voie de circulation adjacente de celle sur laquelle évolue le véhicule de manière confortable pour les passagers du véhicule.

Pendant le changement de voie, le conducteur ou le dispositif peuvent décider d'interrompre la manœuvre et piloter le véhicule de sorte qu'il revienne au centre de la voie de départ, par exemple suite à l'apparition d'un obstacle.

Une solution pour ramener le véhicule au centre de la voie de départ consiste à injecter un vecteur d'état de consigne nul en entrée de la boucle de régulation fermée.

Cependant, le saut de consigne de la boucle de régulation Br, la dynamique du dispositif contrôleur 2 cherchant à suivre le vecteur d'état de consigne pour changer de voie de circulation, et l'écart présent entre le véhicule et la première voie de circulation peuvent engendrer un retour du véhicule au centre de la première voie de circulation qui soit inconfortable pour les passagers.

On pourra se référer au document US20180348767 qui divulgue un dispositif de changement de voie de circulation mettant en œuvre un contrôleur de trajectoire modélisant une trajectoire par une courbe de Bézier.

La trajectoire lors du changement de voie de direction dépend du profil de vitesse du véhicule, la détermination de la trajectoire mettant en œuvre un calcul d'optimum nécessitant d'importants moyens de calcul.

De plus, si la trajectoire déterminée n'est pas compatible avec l'environnement du véhicule, le calcul d'optimum est réitéré.

En outre, le dispositif ne divulgue pas de stratégie d'abandon du changement de voie de circulation.

On pourra par ailleurs se référer au document intitulé « Méthode de planification d'une trajectoire de référence avec une courbe de Bézier lors d'une manœuvre de changement de voie, D Korzeniowski and G Slaski » proposant une méthode de changement de voie de circulation mettant en œuvre deux courbes de Bézier symétriques définissant une trajectoire de changement de voie de circulation vers deux voies de circulation adjacentes situées de part et d'autre du véhicule.

Comme les deux courbes sont symétriques et reliées entre elles, il est nécessaire d'assurer la continuité entre les deux courbes.

De plus, il est nécessaire de calculer plusieurs trajectoires à partir des courbes de Bézier pour déterminer la trajectoire optimale de changement de voie.

La méthode proposée nécessite d'importants moyens de calcul pour assurer la continuité des courbes de Bézier et déterminer la trajectoire optimale de changement de voie.

En outre, le dispositif ne divulgue pas de stratégie d'abandon du changement de voie de circulation.

Le document WO2019/059829 divulgue une méthode de détermination de changement de voie de circulation mettant en œuvre une deuxième déterminée par un système de changement de voie de circulation.

Le changement de voie de circulation est déclenché par l'intervention du conducteur.

Cependant, cette méthode nécessite l'intervention du conducteur et ne propose pas de stratégie d'abandon du changement de voie de circulation.

Le document US 9,796,421 divulgue un dispositif de contrôle latéral pour véhicule automobile mais ne divulgue pas de méthode pour changer de voie de circulation.

Ce dispositif ne divulgue pas non plus de stratégie d'abandon du changement de voie de circulation.

Il est donc proposé de pallier tout ou partie des inconvénients des dispositifs de changement de voie de circulation selon l'état de la technique, notamment en proposant un dispositif de contrôle de trajectoire déterminant de façon autonome une trajectoire de retour d'un véhicule sur sa voie initiale lors de l'abandon du changement de voie de circulation, la manœuvre de retour du véhicule pouvant être réalisée sans incommoder les passagers du véhicule.

Au vu de ce qui précède, l'invention a pour objet un procédé de contrôle de trajectoire pour véhicule automobile, comprenant :

- le pilotage du véhicule à partir d'un premier vecteur d'état de consigne lors d'un changement de voie de circulation de sorte que le véhicule circulant sur une première voie de circulation se déporte sur une deuxième voie de circulation en une durée prédéterminée, la trajectoire du véhicule lors du changement de voie de circulation étant modélisée par une première courbe de Bézier reliant une valeur d'un paramètre de discrétisation à une valeur d'un premier écart latéral du véhicule par rapport au centre d'une voie de circulation et à une valeur d'une variable temporelle représentative de l'évolution du changement de trajectoire.

Le procédé comprend :

- une modélisation d'une trajectoire de retour du véhicule au centre de la première voie de circulation lors d'un abandon du changement de voie de circulation, par une deuxième courbe de Bézier à partir de la valeur de la variable temporelle à l'instant de l'abandon du changement de voie, de la valeur de l'écart latéral associée par la première courbe de Bézier à ladite valeur, et de paramètres de la première courbe de Bézier, la deuxième courbe de Bézier reliant une valeur du paramètre de discrétisation à une valeur d'un deuxième écart latéral du véhicule par rapport au centre d'une voie de circulation et à une valeur de la variable temporelle représentative de l'évolution du changement de trajectoire ;
- la détermination d'un deuxième vecteur d'état de consigne du dispositif de contrôle de trajectoire à partir du deuxième écart latéral, de la variable temporelle et du paramètre de discrétisation ; et
- le pilotage du véhicule par le dispositif de contrôle de trajectoire à partir du deuxième vecteur d'état de consigne de sorte que le véhicule suive la trajectoire de retour.

Selon une caractéristique avantageuse, la modélisation de la trajectoire de retour du véhicule au centre de la première voie de circulation lors de l'abandon du changement de voie de circulation par une deuxième courbe de Bézier comprend une détermination d'au moins quatre points de contrôle de la deuxième courbe de Bézier, les points de contrôle étant choisis de manière à assurer une continuité entre les premières et deuxième courbes de Bézier, un contrôle de la vitesse latérale lors du retour du véhicule au centre de la première voie de manière à assurer une continuité de la vitesse latérale du véhicule, et de sorte que le cumul de la durée de changement de voie de circulation effectuée par le véhicule et de la durée de retour du véhicule sur la première voie de circulation soit égal à la durée prédéterminée.

Avantageusement, la détermination du deuxième vecteur d'état de consigne comprend :

a) la détermination d'une valeur du paramètre de discrétisation de sorte que chaque incrément d'un compteur temporel du dispositif de contrôle de trajectoire soit compris entre deux variables temporelles consécutives ;
b) la détermination de deux deuxièmes écarts latéraux consécutifs à partir de la valeur du paramètre de discrétisation ; et
c) la détermination de deuxièmes valeurs de consigne comprenant un deuxième écart latéral de consigne, une deuxième vitesse de lacet de consigne, un deuxième angle de cap de consigne, et une deuxième vitesse latérale de consigne, les deuxièmes valeurs de consigne étant déterminées à partir des deux variables temporelles consécutives et des deux deuxièmes écarts latéraux consécutifs ;

le deuxième vecteur d'état de consigne comprenant le deuxième écart latéral de consigne et les deuxièmes valeurs de consigne.

De préférence, le procédé comprend en outre la détermination d'un rayon de courbure correctif à partir des deux variables temporelles consécutives, des deux deuxièmes écarts latéraux consécutifs, et de la vitesse longitudinale du véhicule, et la transmission du rayon de courbure correctif au dispositif de contrôle de trajectoire.

Selon une autre caractéristique, lorsque le changement de trajectoire est enclenché, le compteur temporel est démarré et, lorsque la valeur atteinte par le compteur est supérieure ou égale à la valeur de la variable temporelle associée au point de contrôle de la première courbe de Bézier comprenant la variable temporelle de plus grande valeur, le compteur est arrêté pour indiquer la fin du changement de trajectoire, la durée écoulée entre le déclenchement et l'arrêt du compteur étant égale à la durée prédéterminée.

De préférence, le procédé comprend la réitération des étapes a), b), c) et, le cas échéant, la réitération de la détermination d'un rayon de courbure correctif pour chaque incrément du compteur, deux incréments consécutifs étant séparés par une durée constante tant que le véhicule ne circule pas au centre de la première voie de circulation ou le compteur n'est pas arrêté.

L'invention a également pour objet un module de calcul de trajectoire pour véhicule automobile, le module comprenant :

- des moyens pour transmettre un premier vecteur d'état de consigne en entrée d'une boucle de régulation fermée d'un dispositif de contrôle de trajectoire, la boucle étant configurée pour piloter le véhicule automobile de sorte que le véhicule circulant sur une première voie de circulation se déporte sur une deuxième voie de circulation en une durée prédéterminée, la trajectoire étant modélisée par une première courbe de Bézier reliant une valeur d'un paramètre de discrétisation à une valeur d'un écart latéral du véhicule par rapport au centre d'une voie de circulation sur laquelle évolue le véhicule et à une valeur d'une variable temporelle représentative de l'évolution du changement de trajectoire, le vecteur étant déterminé à partir à partir de l'écart latéral, de la variable temporelle et du paramètre de discrétisation ;

- des moyens pour modéliser une trajectoire de retour du véhicule au centre de la première voie de circulation lors de l'abandon du changement de voie de circulation par une deuxième courbe de Bézier à partir de la valeur de la variable temporelle à l'instant de l'abandon du changement de voie de circulation, de la valeur de l'écart latéral associée par la première courbe de Bézier à ladite valeur, et de paramètres de la première courbe de Bézier, la deuxième courbe de Bézier reliant une valeur du paramètre de discrétisation à une valeur d'un deuxième écart latéral du véhicule par rapport au centre d'une voie de circulation et à une valeur de la variable temporelle représentative de l'évolution du changement de trajectoire, la deuxième courbe de Bézier comprenant au moins quatre points de contrôle étant choisis de manière à assurer une continuité entre les première et deuxième courbe de Bézier, une continuité de la vitesse latérale du véhicule lors du basculement de la trajectoire de changement de voie de circulation vers la trajectoire de retour au centre de la première voie de circulation, et de sorte que la durée de changement de voie de circulation effectuée par le véhicule et que la durée de retour du véhicule sur la première voie de circulation soit égale à la durée prédéterminée ;

- des moyens pour déterminer un deuxième vecteur d'état de consigne de la boucle de régulation fermée du dispositif de contrôle de trajectoire de sorte que le véhicule retourne circuler au centre de la première voie
- des moyens pour transmettre le deuxième vecteur d'état de consigne en entrée de la boucle.

De préférence, le module est configuré pour :

d) déterminer une valeur du paramètre de discrétisation de sorte que chaque instant incrément d'un compteur temporel du dispositif de contrôle de trajectoire soit compris entre deux variables temporelles consécutives ;

e) déterminer deux deuxièmes écarts latéraux consécutifs à partir de la valeur du paramètre de discrétisation ; et
f) déterminer des deuxièmes valeurs de consigne comprenant un deuxième écart latéral de consigne, une deuxième vitesse de lacet de consigne, un deuxième angle de cap de consigne, et une deuxième vitesse latérale de consigne, les deuxième valeurs de consigne étant déterminées à partir des deux variables temporelles consécutives et des deux deuxièmes écarts latéraux consécutifs ;

le deuxième vecteur d'état de consigne comprenant le deuxième écart latéral de consigne et les deuxièmes valeurs de consigne.

Selon une caractéristique, le module comporte en outre des moyens pour déterminer un rayon de courbure correctif à partir des deux variables temporelles consécutives, des deux deuxièmes écarts latéraux consécutifs, et de la vitesse longitudinale du véhicule, et la transmission du rayon de courbure correctif au dispositif de contrôle de trajectoire.

Avantageusement, le module est configuré pour démarrer le compteur temporel lorsqu'un changement de trajectoire est enclenché et arrêter le compteur pour indiquer la fin du changement de trajectoire lorsque la valeur atteinte par le compteur est supérieure ou égale à la valeur de la variable temporelle associée au point de contrôle de la première courbe de Bézier comprenant la variable temporelle de plus grande valeur, la durée écoulée entre le déclenchement et l'arrêt du compteur étant égale à la durée prédéterminée.

Selon encore un autre aspect, l'invention a également pour objet un dispositif de contrôle de trajectoire comprenant un module de calcul de trajectoire tel que défini précédemment, et une boucle de régulation fermée configurée pour recevoir en consigne successivement les premier et deuxième vecteurs d'état de consigne transmis par le module de calcul de trajectoire, la boucle de régulation étant en outre configurée pour piloter le véhicule automobile de sorte qu'il suive les trajectoires modélisées par les première et deuxième courbes de Bézier.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] dont il a déjà été fait mention, illustre schématiquement un dispositif de contrôle en temps réel de trajectoire d'un véhicule selon l'état de la technique ;
[Fig 2] illustre schématiquement un mode de réalisation d'un dispositif de contrôle de trajectoire d'un véhicule selon l'invention ;
[Fig 3]

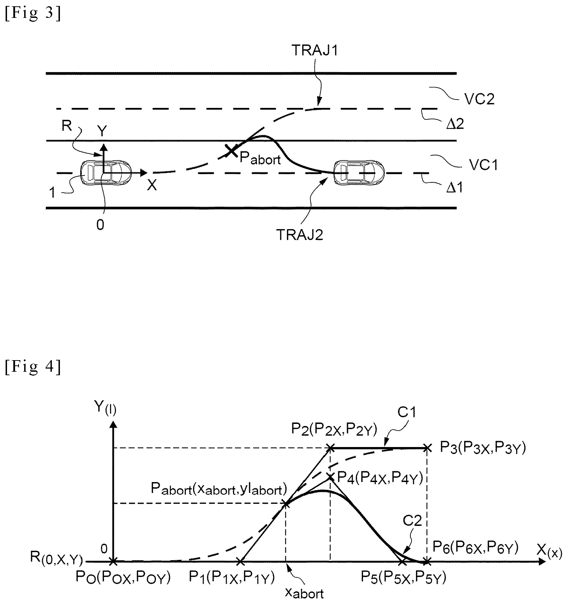

[Fig 4] illustrent un exemple de modélisation d'une trajectoire de retour du véhicule 1 selon l'invention ;

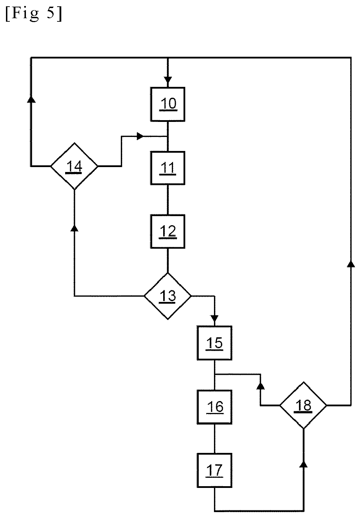

[Fig 5] illustre un mode de mise en œuvre du dispositif de contrôle de trajectoire d'un véhicule selon l'invention ; et

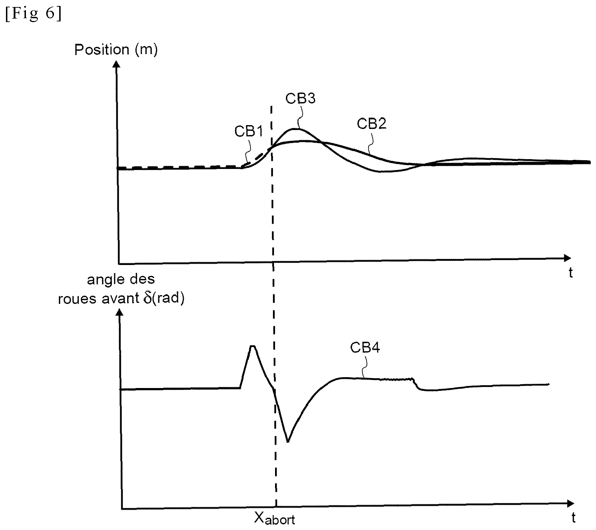

[Fig 6] représente l'évolution temporelle de l'écart latéral de consigne, de l'écart latéral et de l'angle des roues suite à l'action du dispositif de contrôle selon l'invention.

On a schématiquement représenté sur la figure 2 un mode de réalisation d'un dispositif 5 de contrôle de trajectoire du véhicule 1 selon un aspect de l'invention. Les éléments du dispositif 5 identiques aux éléments constituant le dispositif DISP de la figure 1 portent les mêmes références.

Le dispositif 5 comprend la boucle de régulation fermée Br comprenant le dispositif contrôleur 2 pour générer le signal de commande *Ust*, l'observateur 3 pour générer en temps réel le vecteur d'état estimé $\hat{\xi}$ de suivi de voie rectiligne du véhicule à partir du vecteur $\eta$ de mesures actuelles et le module anticipateur 4 pour générer la deuxième commande de braquage Uff.

La commande *Ust* est égale à la valeur d'un angle $\delta_{rect}$ de suivi de trajectoire rectiligne.

Le dispositif 5 comprend en outre un module 6 de contrôle de trajectoire comportant des moyens pour déterminer le premier vecteur d'état de consigne ξ* lors d'un changement de voie de circulation et un deuxième vecteur d'état de consignes $\xi_1^*$ lors du l'abandon du changement de voie de circulation de sorte que le véhicule revienne sur la voie de circulation initiale.

Le module de calcul 6 comprend des moyens pour transmettre les premier et deuxième vecteurs d'état de consigne ξ* et $\xi_1^*$ en entrée de la boucle de régulation Br du dispositif de contrôle de trajectoire 5 de sorte que le véhicule 1 circulant sur une première voie VC1 de circulation se déporte vers une deuxième voie VC2 de circulation et retourne sur la première voie de VC1 pendant une durée prédéterminée Tp, la durée prédéterminée étant initialement prévue comme étant la durée du changement de voie de circulation.

La trajectoire de changement TRAJ1 de la première voie de circulation (voie initiale) VC1 vers la deuxième voie de circulation VC2 est modélisée par une première courbe C1 de Bézier reliant une valeur d'un premier paramètre S à une valeur de l'écart latéral yl du véhicule 1 par rapport au centre de la voie de circulation sur laquelle évolue le véhicule 1 et à une valeur d'une variable temporelle x représentative de l'évolution du changement de trajectoire.

Le premier vecteur d'état de consigne ξ* est déterminé à partir à partir de l'écart latéral yl, de la variable temporelle x et du premier paramètre S.

Le module de calcul 6 comprend en outre des moyens pour modéliser la trajectoire de retour TRAJ2 du véhicule au centre de la première voie VC1 de circulation lors de l'abandon, à un point noté $P_{abort}$, du changement de voie de circulation par une deuxième courbe C2 de Bézier à partir de la valeur $x_{abort}$ de la variable temporelle x à l'instant de l'abandon du changement de voie, de la valeur $yl_{abort}$ de l'écart latéral associée par la première courbe P1 de Bézier à ladite valeur $x_{abort}$, et de paramètres de la première courbe P1 de Bézier, le point Pabort étant défini par les valeurs $x_{abort}$ et $yl_{abort}$.

La deuxième courbe C2 de Bézier relie une valeur du premier paramètre S à une valeur d'un deuxième écart latéral yl2 du véhicule 1 par rapport au centre d'une voie de circulation et à une valeur de la variable temporelle x.

On note Tc la durée du changement de voie effectué par le véhicule 1 jusqu'à la valeur $x_{abort}$ de la variable temporelle x et Tr la durée de retour du véhicule 1 au centre de la voie VC1 à partir de la valeur $x_{abort}$ de la variable temporelle x, la somme des deux durées étant égale à la durée Tp.

Les figures 3 et 4 illustrent un exemple de modélisation de la trajectoire TRAJ1 du véhicule 1 circulant au centre Δ1 de la première voie de circulation VC1 et se déportant au centre Δ2 de la deuxième voie de circulation VC2 adjacente à la première voie VC1 par le module 6, et de la trajectoire TRAJ2 du véhicule 1 ramenant le véhicule 1 au centre Δ1 de la première voie VC1 à partir du point $P_{abort}$.

Bien que dans cet exemple le véhicule 1 se déporte sur son côté gauche dans le sens d'avancement, en variante, le véhicule 1 peut se déporter sur son côté droit.

La courbe TRAJ1 représente la trajectoire du véhicule 1 pour passer de la première voie de circulation VC1 à la deuxième voie VC2.

On note R(O, X, Y) un repère relié à la voie VC1 dont l'origine O est sur le centre Δ1 de la voie VC1 avant que le véhicule 1 commence à se déporter, X est orienté selon le sens de déplacement du véhicule 1 et Y est disposé de sorte que le repère R soit orthogonal.

La trajectoire du véhicule 1 est déterminée en ligne droite, le module anticipateur 4 déterminant à partir de la courbure γ ff

de la route, de la vitesse V du véhicule et des caractéristiques du véhicule 1, notamment la masse du véhicule et la raideur des pneus, la deuxième commande *Uff* de braquage.

Au cours de la manœuvre de changement de voie, au point $P_{abort}$, la manœuvre de changement de voie est abandonnée, le point $P_{abort}$ ayant pour coordonnées ($x_{abort}$ ; $yl_{abort}$) dans le repère R

A compter du point $P_{abort}$, le dispositif 5 pilote le véhicule 1 de sorte qu'il suive la trajectoire de retour TRAJ2.

On se réfère plus particulièrement à la figure 4 qui illustre un exemple de modélisation des trajectoires TRAJ1 et TRAJ2 respectivement par les courbes de Bézier C1 et C2 dans le repère R(O, X, Y).

On suppose que la première courbe de Bézier C1 comprend quatre points de contrôle $P_0$, $P_1$, $P_2$ et $P_3$ de coordonnées respectives ($P_{0x}$ ; $P_{0y}$), ($P_{1x}$ ; $P_{1y}$), ($P_{2x}$ ; $P_{2y}$) et ($P_{3x}$ ; $P_{3y}$) et a pour équation :

$$P(s) = P_0(1-s)^3 + 3P_1 s(1-s)^2 + 3P_2 s^2(1-s) + P_3 s^3 \quad (5)$$

avec s variant entre 0 et 1.

On suppose que l'axe des abscisses X représente la variable temporelle x représentative de l'évolution temporelle du changement de trajectoire et l'axe des ordonnées Y représente la position latérale yl du véhicule 1 par rapport au repère R(O, X, Y) de la voie VC1.

La durée prédéterminée Tp est égale à la valeur $P_{3X}$.

Le déplacement du véhicule 1 s'effectue entre le centre C1 de la première voie VC1 correspondant à une position latérale initiale $yl_{ini}$ définie par les coordonnées du point de contrôle $P_0$ disposé sur le centre C1 et une position finale $yl_{fin}$ définie par les coordonnées du point de contrôle $P_3$ disposé sur le centre C2.

On obtient l'équation suivante :

$$\begin{pmatrix} x \\ yl \end{pmatrix} = \begin{pmatrix} P_{0x} \\ P_{0y} \end{pmatrix}(1-s)^3 + 3\begin{pmatrix} P_{1x} \\ P_{1y} \end{pmatrix}s(1-s)^2 + 3\begin{pmatrix} P_{2x} \\ P_{2y} \end{pmatrix}s^2(1-s) + \begin{pmatrix} P_{3x} \\ P_{3y} \end{pmatrix}s^3$$

$$(6)$$

En variante, la courbe de Bézier peut comprendre plus de quatre points de contrôle pour améliorer la précision de la modélisation de la trajectoire TRAJ1.

En discrétisant l'équation (6) en introduisant la variable i variant de 0 à N, pour chaque instant $x_i$, l'équation (6) est égale à :

$$\binom{x_i}{yl_i} = \binom{P_{0x}}{P_{0y}}(1 - s_i)^3 + 3\binom{P_{1x}}{P_{1y}}s_i(1 - s_i)^2 + 3\binom{P_{2x}}{P_{2y}}s_i{}^2(1 - s_i) +$$
$$\binom{P_{3x}}{P_{3y}}s_i{}^3 \quad (7)$$

La deuxième courbe C2 de Bézier comprend quatre points de contrôle $P_{abort}$, P4, P5 et P6.

Les quatre points de contrôle $P_{abort}$, P4, P5 et P6 de sorte que :

$$P_{abort\,x} = 0 \qquad (8)$$

$$P_{abort\,y} = yl_{abort} \qquad (9)$$

pour assurer une continuité entre les première et deuxième courbes C1, C2 de Bézier ;

$$P_{4x} = P_{2x} - x_{abort} \qquad (10)$$

$$P_{4y} = \frac{1}{2} \cdot P_{2y} \qquad (11)$$

pour assurer une continuité de la vitesse latérale $\dot{yl}$ du véhicule lors du basculement de la trajectoire de changement TRAJ1 de voie de circulation vers la trajectoire de retour TRAJ2 au centre Δ1 de la première voie VC1 de circulation ;

$$P_{5x} = \frac{1}{2} \cdot (P_{6x} - P_{4x}) \qquad (12)$$

$$P_{5y} = 0 \qquad (13)\,;$$

$$P_{6x} = P_{3x} - x_{abort} \qquad (14)$$

de sorte que la durée de changement Tc de voie de circulation effectuée par le véhicule 1 et que la durée de retour Tr du véhicule sur la première voie de circulation VC1 soit égale à la durée prédéterminée Tp.

On pose

$$P_{6y} = 0 \qquad (15)$$

De manière analogue, la deuxième courbe C2 de Bézier à pour équation :

$$\binom{x_i}{yl2_i} = \binom{0}{yl_{abort}}(1 - s_i)^3 + 3\binom{P_{4x}}{P_{4y}}s_i(1 - s_i)^2 + 3\binom{P_{5x}}{0}s_i{}^2(1 - s_i) +$$
$$\binom{P_{6x}}{0}s_i{}^3 \quad (16)$$

la variable i variant de 0 à N, pour chaque instant $x_i$.

Le module 6 comprend une unité de traitement UT déterminant l'équation (15) de la deuxième courbe C2 et mettant en œuvre l'équation (7) de la première courbe C1 et l'équation (15) de la deuxième courbe C2.

Le premier paramètre S comprend l'ensemble des paramètres de discrétisation Si i variant de 1 à N, N étant un nombre entier.

Le nombre N est choisi de sorte qu'il soit suffisamment grand pour obtenir des trajectoires du véhicule 1 à partir des courbes C1 et C2 qui ne soit pas excessivement discrétisées pour ne pas ralentir la boucle de régulation Br et nuire au confort des passagers, et de sorte qu'il ne soit pas excessivement grand afin de minimiser la charge de calcul de l'unité de traitement UT.

N est par exemple égal à 50, les courbes C1 et C2 étant discrétisées en 50 points.

Bien entendu la valeur de N peut être différente de 50.

La valeur de N peut être choisie de manière à ne pas discrétiser excessivement la trajectoire, la valeur de N étant par exemple supérieure à 30.

En outre, la valeur de N peut être choisie de manière à ne pas surcharger l'unité de traitement UT, la valeur de N étant par exemple inférieure à 100.

Le module 6 comprend en outre un compteur CP temporel, le module 6 enclenchant le compteur CP lors du changement de voie de trajectoire et arrêtant le compteur lorsque la valeur atteinte par le compteur est supérieure ou égale à la valeur de la variable temporelle x associée au point de contrôle de la première courbe C1 de Bézier $P_3$ comprenant la plus grande valeur de la variable temporelle $P_{3x}$, la durée écoulée entre le déclenchement et l'arrêt du compteur CP étant égale à la durée prédéterminée Tp.

Le compteur CP fonctionne selon une période Tn.

La période Tn est choisie selon la fréquence de fonctionnement du module 6 et de la boucle Br.

La période Tn est par exemple égale à 10 ms.

La figure 5 illustre un exemple de mise en œuvre du dispositif 5 de contrôle de trajectoire lors du changement de voie de circulation.

On suppose que l'équation (7) et les points de contrôle $P_0$, $P_1$, $P_2$ et $P_3$ sont stockés dans une mémoire MEM du module 6.

Lors de l'étape 10 suivante, le changement de voie de circulation est initié.

Puis, dans une étape 11, le module 6 enclenche le compteur CP.

Pour chaque incrément Tn du compteur, le module 6 détermine le vecteur d'état de consigne ξ* à partir de l'écart latéral $yl_i$, de la variable temporelle $x_i$ et du paramètre de discrétisation Si.

Le vecteur d'état de consigne ξ* comprend des valeurs de consigne comprenant la vitesse de lacet de consigne $\dot{\Psi}$ref, un angle de cap de consigne $\Psi_{ref}$, et une vitesse latérale de consigne $\dot{yl}_{ref}$ et l'écart latéral de consigne $yl_{ref}$.

L'angle de braquage de consigne $\delta$ref, la variation de l'angle de braquage $\dot{\delta}$ref et l'intégrale de la position latérale ∫-ylref de consigne sont égaux à zéro.

Deux incréments consécutifs sont séparés par la durée Tn.

Le module 6 détermine une valeur du paramètre de discrétisation Si de sorte que chaque incrément Tn du compteur temporelle Cp soit compris entre deux variables temporelles $x_i$ et $x_{i+1}$ consécutives.

Puis le module 6 détermine les deux latéraux consécutifs $yl_i$ et $yl_{i+1}$ à partir de la valeur du paramètre de discrétisation Si.

Le module 6 détermine un deuxième écart latéral intermédiaire $yl_1$ par interpolation des deux écarts latéraux consécutifs $yl_i$ et $yl_{i+1}$.

Puis le module 6 détermine des valeurs de consigne selon les équations suivantes :

$$\dot{y}l_{ref} = \frac{yl_{i+1}-yl_i}{x_{i+1}-x_i} \qquad (17)$$

$$\dot{\psi}_{ref} = \frac{a_{lat}}{V} \qquad (18)$$

où V est la vitesse longitudinale du véhicule 1 et $a_{lat}$ est l'accélération latérale instantanée de la trajectoire égale à :

$$a_{lat} = \frac{yl_{i+2}-2yl_{i+1}+yl_i}{x_{i+1}-x_i} \qquad (19)$$

et

$$\psi_{ref} = \frac{\dot{y}l_{ref}}{V} \qquad (20)$$

L'écart latéral de consigne yl$_{ref}$ est égal à :

$$\begin{cases} yl_{ref} = yl1 \text{ lorsque le véhicule évolue sur la première voie de circulation VC1} \\ yl_{ref} = yl1 - yl_{fin} \text{ lorsque le véhicule évolue sur la deuxième voie de circulation VC2} \end{cases}$$

$$(21)$$

Au cours d'une étape optionnelle 12, lorsque le module 6 comporte des moyens pour déterminer un rayon de courbure correctif $\rho_{SALC}$, le module 6 détermine le rayon de courbure correctif à partir de l'accélération latérale instantanée a$_{lat}$, de la vitesse latérale $\dot{y}l$, et de la vitesse longitudinale V du véhicule selon l'équation suivante :

$$\rho_{SALC} = \frac{Va_{lat} - \dot{y}_l a_{lat}}{\left(V^2 + \dot{y}_l^2\right)^{\frac{3}{2}}} \qquad (22)$$

La valeur du rayon de courbure correctif $\rho_{SALC}$ est transmise au module anticipateur 4 et additionner à la deuxième commande Uff permettant d'améliorer la dynamique du suivi de trajectoire.

Si aucun ordre d'abandon du changement de voie n'est émis (étape 13) et si le changement de voie n'est pas terminé (étape 14), on poursuit à l'étape 11.

Si aucun ordre d'abandon du changement de voie n'est émis (étape 13) et le changement de voie est terminé (étape 14), on poursuit à l'étape 10.

Lors de l'abandon du changement de voie de circulation (étape 13), au cours de l'étape 15 suivante, le module 6 modélise la trajectoire de retour TRAJ2 du véhicule 1 au centre de la première voie de circulation VC1. Cette modélisation est effectuée au moyen de la deuxième courbe C2 de Bézier en déterminant les quatre points de contrôle P$_{abort}$, P4, P5 et P6.

Puis, durant une étape 16, pour chaque Tn du compteur CP, le module 6 détermine le deuxième vecteur d'état $\xi_1^*$ comprenant des deuxièmes valeurs de consigne comprenant une deuxième vitesse de lacet de consigne $\dot{\Psi}$abort, un deuxième angle de cap de consigne $\Psi_{abort}$, et une deuxième vitesse latérale de consigne $\dot{yl}_{abort}$ et un deuxième écart latéral de consigne yl2$_{ref}$.

Les deuxièmes valeurs de consigne restantes sont égales à zéro.

Le module 6 détermine la valeur du paramètre de discrétisation Si de sorte que chaque incrément Tn du compteur temporelle Cp soit compris entre deux variables temporelles x$_i$ et x$_{i+1}$ consécutives.

Puis le module 6 détermine les deux deuxièmes écarts latéraux consécutifs yl2$_i$ et yl2$_{i+1}$ à partir de la valeur du paramètre de discrétisation Si.

Le module 6 détermine des valeurs de consigne selon les équations suivantes :

$$\dot{yl2}_{ref} = \frac{yl2_{i+1} - yl2_i}{x_{i+1} - x_i} \qquad (23)$$

$$\dot{\psi}_{abort} = \frac{a_{lat2}}{V} \qquad (24)$$

où a$_{lat2}$ est la deuxième accélération latérale instantanée de la trajectoire égale à :

$$a_{lat2} = \frac{yl2_{i+2} - 2yl2_{i+1} + yl2_i}{x_{i+1} - x_i} \qquad (25)$$

et

$$\psi_{abort} = \frac{\dot{y}l2_{ref}}{V} \qquad (26)$$

Le deuxième écart latéral de consigne $yl2_{ref}$ est égal à la position latérale du centre de la première voie de circulation VC1.

Au cours d'une étape optionnelle 17, le module 6 peut déterminer le rayon de courbure correctif $\rho_{SALC}$ à partir l'accélération latérale instantanée $a_{lat2}$, la deuxième vitesse latérale $\dot{y}l2$, et de la vitesse longitudinale V du véhicule selon l'équation suivante :

$$\rho_{SALC} = \frac{Va_{lat2} - \dot{y}_{l2}a_{lat2}}{(V^2 + \dot{y}_l2^2)^{\frac{3}{2}}} \qquad (27)$$

La valeur du rayon de courbure correctif $\rho_{SALC}$ est transmise au module anticipateur 4 et additionnée à la deuxième commande Uff permettant d'améliorer la dynamique du suivi de trajectoire.

Tant que le véhicule 1 ne circule pas au centre de la voie de circulation VC1 et la valeur atteinte par le compteur CP n'est pas supérieure à la valeur $P_{3x}$ du point de contrôle $P_3$ (étape 18), on poursuit à l'étape 16.

Lorsque le véhicule est par exemple au centre de la voie de circulation VC1 ou la valeur atteinte par le compteur CP est supérieure ou égale à la valeur $P_{3x}$ (étape 18), la manœuvre de retour au centre de la voie de circulation VC1 est terminée. On poursuit à l'étape 10.

En variante, lorsque la valeur absolue de l'écart latéral yl est inférieure à un seuil pendant une durée prédéterminée, la manœuvre de retour au centre de la voie de circulation VC1 est terminée.

Le seuil est par exemple égal à 10 cm et la durée prédéterminée est par exemple égale à 2 secondes.

Si le véhicule 1 n'est pas complètement aligné sur le centre $\Delta1$ de la première voie VC1 à l'issu du changement de trajectoire, la boucle de régulation Br aligne ultérieurement le véhicule 1 sur le centre $\Delta1$.

La figure 6 représente l'évolution temporelle de la première position latérale de consigne $yl_{ref}$ (courbe CB1) jusqu'à l'instant d'abandon de la manœuvre de changement de voie $x_{abort}$, de la deuxième position latérale de consigne $Yl2_{ref}$ (courbe CB2) à partir de l'instant $x_{abort}$, de la position latérale yl du véhicule 1 (courbe CB3) et l'angle des roues avant $\delta$ (courbe CB4) lors d'un changement de voie de circulation vers la droite puis vers la gauche du véhicule 1 circulant à la vitesse V de 90 km/h.

La modélisation de la trajectoire de retour du véhicule vers la voie de circulation initiale VC1 par la deuxième courbe C2 de Bézier permet d'adapter de façon aisée les propriétés géométriques de la deuxième courbe C2 selon les paramètres de la première courbe C1 de Bézier modélisant la trajectoire de changement de voie de circulation de sorte que le retour du véhicule sur la voie de circulation initiale soit confortable pour les passagers du véhicule.

De plus, le calcul du deuxième vecteur d'état de consigne $\overset{*}{\xi_1}$ pour le changement de trajectoire et l'adaptation des propriétés géométriques de la courbe P ne nécessitent pas d'importants moyens de calcul.

Enfin, la trajectoire de changement de voie de circulation est aisément adaptable à la boucle de régulation Br existante sur la plupart des véhicules permettant de réutiliser des lois de commande existantes.

**Revendications**

1.  Procédé de contrôle de trajectoire pour véhicule automobile (1), comprenant :

    - le pilotage du véhicule à partir d'un premier vecteur d'état de consigne ($\xi^*$) lors d'un changement de voie de circulation de sorte que le véhicule circulant sur une première voie de circulation se déporte sur une deuxième voie de circulation en une durée prédéterminée (Tp), la trajectoire du véhicule lors du changement de voie de circulation (TRAJ1) étant modélisée par une première courbe de Bézier (C1) reliant une valeur d'un paramètre de discrétisation (Si) à une valeur d'un premier écart latéral ($yl_i$, $yl_{i+1}$) du véhicule par rapport au centre d'une voie de circulation et à une valeur d'une variable temporelle ($x_i$, $x_{i+1}$) représentative de l'évolution du changement de trajectoire ;

    **caractérisé en ce que** le procédé comprend :

    - une modélisation d'une trajectoire de retour (TRAJ2) du véhicule au centre de la première voie de circulation lors d'un abandon du changement de voie de circulation, par une deuxième courbe de Bézier (C2) à partir de la valeur ($x_{abort}$) de la variable temporelle (x) à l'instant de l'abandon du changement de voie, de la valeur ($yl_{abort}$) de l'écart latéral (yl) associée par la première courbe de Bézier à ladite valeur, et de paramètres de la première courbe de Bézier, la deuxième courbe de Bézier reliant une valeur du paramètre de discrétisation (Si) à une valeur d'un deuxième écart latéral ($yl2_i$, $yl2_{i+1}$) du véhicule par rapport au centre d'une voie de circulation et à une valeur de la variable temporelle ($x_i$, $x_{i+1}$) représentative de l'évolution du changement de trajectoire ;

- la détermination d'un deuxième vecteur d'état de consigne $(\xi_1^*)$ du dispositif de contrôle de trajectoire (5) à partir du deuxième écart latéral, de la variable temporelle et du paramètre de discrétisation ; et
- le pilotage du véhicule par le dispositif de contrôle de trajectoire à partir du deuxième vecteur d'état de consigne de sorte que le véhicule suive la trajectoire de retour.

2. Procédé selon la revendication 1, dans lequel la modélisation de la trajectoire de retour (TRAJ2) du véhicule au centre de la première voie de circulation lors de l'abandon du changement de voie de circulation par une deuxième courbe de Bézier (C2) comprend une détermination d'au moins quatre points de contrôle ($P_{abort}$, P4, P5, P6) de la deuxième courbe de Bézier, les points de contrôle étant choisis de manière à assurer une continuité entre les première et deuxième courbes de Bézier (C1, C2), un contrôle de la vitesse latérale lors du retour du véhicule au centre de la première voie de manière à assurer une continuité de la vitesse latérale du véhicule, et de sorte que le cumul de la durée de changement de voie de circulation effectuée par le véhicule et de la durée de retour du véhicule sur la première voie de circulation soit égal à la durée prédéterminée (Tp).

3. Procédé selon l'une des revendications 1 et 2, dans lequel la détermination du deuxième vecteur d'état de consigne comprend :

   a) la détermination d'une valeur du paramètre de discrétisation (Si) de sorte que chaque incrément (Tn) d'un compteur temporel (CP) du dispositif de contrôle de trajectoire soit compris entre deux variables temporelles ($x_i$, $x_{i+1}$) consécutives ;
   b) la détermination de deux deuxièmes écarts latéraux ($yl2_i$, $yl2_{i+1}$) consécutifs à partir de la valeur du paramètre de discrétisation ;
   c) la détermination de deuxièmes valeurs de consigne comprenant un deuxième écart latéral de consigne ($yl2_{ref}$), une deuxième vitesse de lacet de consigne ($\psi_{abort}$), un deuxième angle de cap de consigne ($\psi_{abort}$), et une deuxième vitesse latérale de consigne (*ylabort*), les deuxièmes valeurs de consigne étant déterminées à partir des deux variables temporelles ($x_i$, $x_{i+1}$) consécutives et des deux deuxièmes écarts latéraux ($yl2_i$, $yl2_{i+1}$) consécutifs ;

le deuxième vecteur d'état de consigne comprenant le deuxième écart latéral de consigne et les deuxièmes valeurs de consigne.

4. Procédé selon la revendication 3, comprenant en outre la détermination d'un rayon de courbure correctif ($\rho_{SALC}$) à partir des deux variables temporelles ($x_i$, $x_{i+1}$) consécutives, des deux deuxièmes écarts latéraux ($yl2_i$, $yl2_{i+1}$) consécutifs, et de la vitesse longitudinale (V) du véhicule, et la transmission du rayon de courbure correctif au dispositif de contrôle de trajectoire (5).

5. Procédé selon l'une des revendications 3 et 4, dans lequel lorsque le changement de trajectoire est enclenché, le compteur temporel (CP) est démarré et, lorsque la valeur atteinte par le compteur est supérieure ou égale à la valeur de la variable temporelle associée au point de contrôle de la première courbe de Bézier (C1) comprenant la variable temporelle de plus grande valeur, le compteur est arrêté pour indiquer la fin du changement de trajectoire, la durée écoulée entre le déclenchement et l'arrêt du compteur étant égale à la durée prédéterminée (Tp).

6. Procédé selon la revendication 5, comprenant la réitération des étapes a), b), c) et, le cas échéant la réitération de la détermination d'un rayon de courbure correctif ($\rho_{SALC}$) pour chaque incrément du compteur, deux incréments consécutifs étant séparés par une durée constante tant que le véhicule ne circule pas au centre de la première voie de circulation ou le compteur n'est pas arrêté.

7. Module (6) de calcul de trajectoire pour véhicule automobile, comprenant :

   - des moyens pour transmettre un premier vecteur d'état de consigne en entrée d'une boucle de régulation (Br) fermée d'un dispositif de contrôle de trajectoire (5), la boucle étant configurée pour piloter le véhicule automobile de sorte que le véhicule circulant sur une première voie de circulation se déporte sur une deuxième voie de circulation en une durée prédéterminée (Tp), la trajectoire étant modélisée par une première courbe de Bézier (C1) reliant une valeur d'un paramètre de discrétisation (Si) à une valeur d'un écart latéral ($yl_i$, $yl_{i+1}$) du véhicule par rapport au centre d'une voie de circulation sur laquelle évolue le véhicule et à une valeur d'une variable temporelle ($x_i$, $x_{i+1}$) représentative de l'évolution du changement de trajectoire, le vecteur étant déterminé à partir à partir de l'écart latéral, de la variable temporelle et du paramètre de discrétisation, et

**caractérisé en ce que** le module comprend :

- des moyens pour modéliser une trajectoire de retour (TRAJ2) du véhicule au centre de la première voie de circulation lors de l'abandon du changement de voie de circulation par une deuxième courbe de Bézier (C2) à partir de la valeur ($x_{abort}$) de la variable temporelle à l'instant de l'abandon du changement de voie de circulation, de la valeur ($yl_{abort}$) de l'écart latéral associée par la première courbe de Bézier à ladite valeur, et de paramètres de la première courbe de Bézier, la deuxième courbe de Bézier reliant une valeur du paramètre de discrétisation (Si) à une valeur d'un deuxième écart latéral ($yl2_i$, $yl2_{i+1}$) du véhicule par rapport au centre d'une voie de circulation et à une valeur de la variable temporelle ($x_i$, $x_{i+1}$) représentative de l'évolution du changement de trajectoire, la deuxième courbe de Bézier comprenant au moins quatre points de contrôle ($P_{abort}$, P4, P5, P6) étant choisis de manière à assurer une continuité entre les première et deuxième courbe de Bézier, une continuité de la vitesse latérale du véhicule lors du basculement de la trajectoire de changement de voie de circulation vers la trajectoire de retour au centre de la première voie de circulation, et de sorte que la durée de changement de voie de circulation effectuée par le véhicule et que la durée de retour du véhicule sur la première voie de circulation soit égale à la durée prédéterminée ;

- des moyens pour déterminer un deuxième vecteur d'état de consigne $\left(\xi_1^*\right)$ de la boucle de régulation (Br) fermée du dispositif de contrôle de trajectoire (5) de sorte que le véhicule retourne circuler au centre de la première voie
- des moyens pour transmettre le deuxième vecteur d'état de consigne en entrée de la boucle.

8. Module selon la revendication 7, configuré pour :

d) déterminer une valeur du paramètre de discrétisation (Si) de sorte que chaque instant incrément (Tn) d'un compteur temporel (CP) du dispositif de contrôle de trajectoire soit compris entre deux variables temporelles ($x_i$, $x_{i+1}$) consécutives ;
e) déterminer deux deuxièmes écarts latéraux ($yl2_i$, $yl2_{i+1}$) consécutifs à partir de la valeur du paramètre de discrétisation ;
f) déterminer des deuxièmes valeurs de consigne comprenant un deuxième écart latéral de consigne ($yl2_{ref}$), une deuxième vitesse de lacet de consigne ($\dot{\psi}_{abort}$), un deuxième angle de cap de consigne ($\psi_{abort}$), et une deuxième vitesse latérale de consigne (*ẏlabort*), les deuxième valeurs de consigne étant déterminées à partir des deux variables temporelles ($x_i$, $x_{i+1}$) consécutives et des deux deuxièmes écarts latéraux ($yl2_i$, $yl2_{i+1}$) consécutifs ;

le deuxième vecteur d'état de consigne comprenant le deuxième écart latéral de consigne et les deuxièmes valeurs de consigne.

9. Module selon la revendication 8, comportant en outre des moyens pour déterminer un rayon de courbure correctif ($\rho_{SALC}$) à partir des deux variables temporelles ($x_i$, $x_{i+1}$) consécutives, des deux deuxièmes écarts latéraux ($yl2_i$, $yl2_{i+1}$) consécutifs, et de la vitesse longitudinale (V) du véhicule, et la transmission du rayon de courbure correctif au dispositif de contrôle de trajectoire (5).

10. Module selon l'une des revendications 7 à 9, configuré pour démarrer le compteur temporel (CP) lorsqu'un changement de trajectoire est enclenché et arrêter le compteur pour indiquer la fin du changement de trajectoire lorsque la valeur atteinte par le compteur est supérieure ou égale à la valeur de la variable temporelle associée au point de contrôle de la première courbe de Bézier (C1) comprenant la variable temporelle de plus grande valeur, la durée écoulée entre le déclenchement et l'arrêt du compteur étant égale à la durée prédéterminée (Tp).

11. Dispositif de contrôle de trajectoire (5) comprenant un module de calcul de trajectoire (6) selon l'une des revendications 7 à 10, et une boucle de régulation fermée (Br) configurée pour recevoir en consigne successivement les premier et deuxième vecteurs d'état de consigne transmis par le module de calcul de trajectoire, la boucle de régulation étant en outre configurée pour piloter le véhicule automobile (1) de sorte qu'il suive les trajectoires (TRAJ1, TRAJ2) modélisées par les première et deuxième courbes de Bézier (C1, C2).

[Fig 1]

[Fig 2]

[Fig 3]

[Fig 4]

[Fig 5]

[Fig 6]

Position (m)

CB3

CB1    CB2

t

angle des
roues avant δ(rad)

CB4

$X_{abort}$    t

Europäisches
Patentamt

European
Patent Office

Office européen
des brevets

**RAPPORT DE RECHERCHE EUROPEENNE**

Numéro de la demande

EP 21 17 2197

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/284266 A1 (TALAMONTI WALTER JOSEPH [US] ET AL) 4 octobre 2018 (2018-10-04) | 1-3,5-8, 10,11 | INV. B60W30/18 B60W40/072 G05D1/02 B60W50/00 |
| Y | * alinéas [0002], [0040] - [0042], [0048], [0077] - [0078]; figure 6 * ----- | 4,9 | |
| A | CN 110 597 245 A (UNIV BEIJING JIAOTONG) 20 décembre 2019 (2019-12-20) * alinéas [0159] - [0178]; figure 3 * ----- | 1-11 | |
| Y | BAE IL ET AL: "Lane Change Maneuver based on Bezier Curve providing Comfort Experience for Autonomous Vehicle Users", 2019 IEEE INTELLIGENT TRANSPORTATION SYSTEMS CONFERENCE (ITSC), IEEE, 27 octobre 2019 (2019-10-27), pages 2272-2277, XP033668181, DOI: 10.1109/ITSC.2019.8916845 * page 2273 * ----- | 4,9 | |
| A | D KORZENIOWSKI ET AL: "Method of planning a reference trajectory of a single lane change manoeuver with Bezier curve", IOP CONFERENCE SERIES: MATERIALS SCIENCE AND ENGINEERING, vol. 148, 1 septembre 2016 (2016-09-01), page 012012, XP055765061, GB ISSN: 1757-8981, DOI: 10.1088/1757-899X/148/1/012012 * le document en entier * ----- | 1-11 | |

| DOMAINES TECHNIQUES RECHERCHES (IPC) |
|---|
| B60W G05D |

-/--

Le présent rapport a été établi pour toutes les revendications

| Lieu de la recherche | Date d'achèvement de la recherche | Examinateur |
|---|---|---|
| Munich | 31 août 2021 | Stolle, Martin |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    ...........................................................................
& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 21 17 2197

| | DOCUMENTS CONSIDERES COMME PERTINENTS | | | |
|---|---|---|---|---|
| Catégorie | Citation du document avec indication, en cas de besoin, des parties pertinentes | Revendication concernée | CLASSEMENT DE LA DEMANDE    (IPC) | |
| A | HONGYU ZHENG ET AL: "Investigation of a Longitudinal and Lateral Lane-Changing Motion Planning Model for Intelligent Vehicles in Dynamical Driving Environments", IEEE ACCESS, vol. 7, 1 janvier 2019 (2019-01-01), pages 44783-44802, XP055766181, DOI: 10.1109/ACCESS.2019.2909273 * figures 2,11 *       ----- | 1-11 | | |
| | | | DOMAINES TECHNIQUES RECHERCHES  (IPC) | |
| | | | | |

Le présent rapport a été établi pour toutes les revendications

| Lieu de la recherche | Date d'achèvement de la recherche | Examinateur |
|---|---|---|
| Munich | 31 août 2021 | Stolle, Martin |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 17 2197

31-08-2021

| Document brevet cité au rapport de recherche | Date de publication | Membre(s) de la famille de brevet(s) | Date de publication |
|---|---|---|---|
| US 2018284266 A1 | 04-10-2018 | CN 108688657 A | 23-10-2018 |
| | | CN 108688665 A | 23-10-2018 |
| | | CN 108688721 A | 23-10-2018 |
| | | CN 108688722 A | 23-10-2018 |
| | | CN 108706007 A | 26-10-2018 |
| | | CN 108706008 A | 26-10-2018 |
| | | RU 2018106043 A | 20-08-2019 |
| | | RU 2018109960 A | 23-09-2019 |
| | | RU 2018109962 A | 23-09-2019 |
| | | RU 2018110615 A | 26-09-2019 |
| | | RU 2018110618 A | 26-09-2019 |
| | | RU 2018111040 A | 01-10-2019 |
| | | US 2018281804 A1 | 04-10-2018 |
| | | US 2018281854 A1 | 04-10-2018 |
| | | US 2018281855 A1 | 04-10-2018 |
| | | US 2018281856 A1 | 04-10-2018 |
| | | US 2018284266 A1 | 04-10-2018 |
| | | US 2018286242 A1 | 04-10-2018 |
| CN 110597245 A | 20-12-2019 | AUCUN | |

**RÉFÉRENCES CITÉES DANS LA DESCRIPTION**

**Documents brevets cités dans la description**

- US 20180348767 A
- WO 2019059829 A
- US 9796421 B